# DEMANDE DE BREVET EUROPEEN

(11) **EP 2 952 593 A1**
(43) Date de publication de la demande: **09.12.2015**
(21) Numéro de dépôt: 14305865.9
(22) Date de dépôt: 06.06.2014
(51) Int. Cl.: C22B 3/02, C22B 3/18

(54) **Procédé et installation de biolixiviation**

(71) Demandeur: L'AIR LIQUIDE, SOCIETE ANONYME POUR L'ETUDE ET L'EXPLOITATION DES PROCEDES GEORGES CLAUDE, 75007 Paris (FR); Bureau de Recherche Géologique et Minières, 45060 Orleans Cedex (FR); Milton Roy Mixing, 77210 Samoreau (FR)
(72) Inventeur: Guezennec, Anne-Gwénaëlle, 45000 Orleans (FR); Ibarra, Dominique, 91190 Gif-Sur-Yvette (FR); Jaillet, Marie, 91260 Juvisy sur Orge (FR); Menard, Yannick, 45370 Mezieres Les Clery (FR); Morib, Dominique, 45160 Olivet (FR); Pubill Melsio, Anna, 75014 Paris (FR); Savreux, Frédéric, 77670 Saint Mammes (FR); d'Hugues, Patrick M., 45160 Olivet (FR)
(74) Mandataire: De Vleeschauwer, Natalie Y.L.D.

(57) **Abrégé**

Procédé de biolixiviation en lagunage d'un minerai métallifère (1) dans lequel la température de la suspension contenant le minerai métallifère à biolixivier (1), un consortium de biolixiviation et un substrat nutritif (3) des micro-organismes du consortium est maintenue dans une plage prédéterminée appropriée pour la biolixiviation en régulant les débits et la composition d'un gaz contenant de l'oxygène et optionnellement également du CO₂ injecté dans la suspension.

## Description

### Domaine de l'invention

L'invention porte sur un procédé et une installation de biolixiviation permettant l'extraction de métaux et la valorisation de ces ressources métalliques ainsi extraites.

### Art antérieur

La demande en composés métalliques ne cessant d'augmenter, la valorisation de ressources autrefois jugées peu accessibles est maintenant d'un intérêt économique croissant. Ces ressources peuvent être d'anciens dépôts de déchets miniers contenant des quantités résiduelles de métaux ou des minerais à plus faibles teneurs en métaux et/ou de nature plus complexe car comprenant différents métaux et/ou comprenant un haut niveau d'impureté. De plus ces métaux se trouvent souvent sous la forme de composés sulfurés dont le traitement est techniquement complexe et lourd en investissements.

Un des procédés les plus fréquemment utilisés pour traiter de tels minerais est la pyrométallurgie. Après concentration des sulfures par un traitement physico-chimique du minerai, ce procédé consiste en un traitement thermique qui permet de « brûler » les sulfures à l'aide d'une réaction d'oxydation et qui génère une calcine riche en fer et un produit solide concentré en métaux de valeur (matte). De tels procédés impliquent l'émission de gaz toxiques dont le traitement peut être très pénalisant et ne sont que peu efficaces pour le traitement de minerais comprenant un taux élevé de carbonate.

Par rapport à la pyrométallurgie, les procédés hydrométallurgiques demandent en général un investissement plus faible et sont particulièrement adaptés au traitement de ressources métalliques de composition complexe et/ou de teneur faible dans le métal d'intérêt. Parmi les procédés hydrométallurgiques, une solution généralement très satisfaisante des points de vue environnemental et économique, appelée biohydrométallurgie, consiste à extraire les métaux en utilisant des micro-organismes. Elle permet en particulier de traiter aussi bien des déchets miniers que des minerais sulfurés de faible teneur.

Le processus de dégradation des minéraux sulfurés à l'aide de micro-organismes constitue la base du procédé de biolixiviation utilisé en biohydrométallurgie. Ces micro-organismes puisent l'énergie nécessaire au fonctionnement de leurs métabolismes dans les réactions d'oxydation, en milieu très acide, du fer et du soufre, constituants majeurs de minerais sulfurés qui renferment d'importantes quantités de métaux de grande valeur économique (cuivre, nickel, cobalt, zinc, or, molybdène, argent,..). La biolixiviation permet ainsi de mettre à profit la capacité métabolique extrêmophile de certains microbes comme *Sulfolobus metallicus, Acidithiobacillus ferrooxidans, Acidithiobacillus thiooxidans,* et *Leptospirillum ferrooxidans,* pour extraire ces métaux d'intérêt.

La biolixiviation en tas (en anglais : « heap bioleaching ») est une technique particulière consistant à concasser grossièrement le minerai à traiter puis à le stocker en tas sur des aires étanches. Ces tas peuvent atteindre plus de 100 m de haut. Ensuite une solution contenant des micro-organismes et un substrat nutritif adéquat est dispersée au sommet du tas. Au cours de sa percolation dans le tas, la solution est progressivement enrichie en métal. Après sa percolation dans le tas, cette solution enrichie est récupérée à la base du tas. La biolixiviation en tas présente une cinétique lente, voire très lente (des années de traitement continu parfois), des rendements variables (entre 30 et 90%) et donc parfois faibles, et est difficile à mettre en oeuvre pour le traitement de minerais polymétalliques et/ou contenant du carbone. La cinétique lente de ce procédé est notamment liée à la difficulté d'application et de maintien des conditions optimales (températures, concentration et dispersion du substrat nutritif, concentration et dispersion de l'oxygène) de façon homogène à l'intérieur du tas.

Afin d'atteindre des rendements élevés et des durées d'opération plus attractifs, la biolixiviation peut être effectuée en réacteur mécaniquement agité et thermiquement régulé. Après broyage du minerai à traiter et concentration de la phase sulfurée par des moyens physico-chimiques, celui-ci est mélangé, dans des réacteurs, à une phase aqueuse contenant des micro-organismes et un substrat nutritif, on obtient ainsi une suspension. Les réacteurs, fabriqués en matériaux inoxydables, comprennent des moyens d'agitation, d'injection d'air et d'échange de chaleur permettant respectivement de maintenir en suspension le minerai et de disperser le gaz dans la suspension, d'assurer l'apport en d'oxygène pour les réactions et pour les micro-organismes, et de contrôler la température de la suspension afin de maintenir la cinétique de biolixiviation la plus rapide possible.

Ces réacteurs sont donc nécessairement limités en taille et ne permettent de traiter que des suspensions à des concentrations en minerai limitées (de l'ordre de 15 à 20% en masse de solide par rapport à la masse totale de suspension). Malgré ces avantages, l'investissement en équipements et le coût opératoire en énergie qu'impose la mise en oeuvre de telles installations ne sont justifiés que pour le traitement de minerais métalliques à haute plus-value tels que des minerais aurifères.

### Description de l'invention

La présente invention porte donc sur un procédé de biolixiviation d'un minerai métallifère dont les coûts d'investissement et les contraintes environnementales sont limités, ainsi que sur une installation de biolixiviation adaptée pour la mise en oeuvre dudit procédé.

Le procédé suivant l'invention est particulièrement adapté au traitement de minerai métallifère de faible plus-value et/ou de composition complexe, mais est également avantageux pour le traitement de minerais métallifères riches, à haute plus-value et/ou de composition simple.

Dans la description de l'invention, on désigne par minerai métallifère : un minerai extrait d'une mine, un déchet minier ou un concentré résultant du traitement minéralurgique d'un minerai et/ou d'un déchet minier.

Un tel minerai métallifère peut comprendre un ou plusieurs métaux à libérer de la matrice minérale par biolixiviation. Ainsi, les références ci-après à un « métal » au singulier présent dans le minerai métallifère ou libéré par biolixiviation peuvent se référer à la fois à un seul métal ou à (une combinaison de) plusieurs métaux.

Dans le présent contexte, on comprend par suspension : toute phase continue liquide comportant une phase solide dispersée dans la phase liquide.

Un premier objet de l'invention est un procédé de biolixiviation par exemple du type « en lagunage » d'un minerai métallifère, ledit procédé comprenant les étapes suivantes :
a) l'ajout dans un bassin d'un minerai métallifère broyé, d'un milieu comprenant un consortium microbien de biolixiviation et d'un substrat nutritif des micro-organismes du consortium microbien,
b) l'obtention d'une suspension dans le bassin au moyen d'au moins un système agitation pour la mise et/ou le maintien en suspension du minerai métallifère dans une phase liquide,
c) l'injection dans la suspension d'un gaz contenant de l'oxygène et optionnellement du dioxyde de carbone métabolisable par les micro-organismes,
d) la biolixiviation du minerai métallifère par le consortium microbien de manière à obtenir du métal libéré,
e) la récupération d'un produit liquide contenant le métal libéré et consistant en (a) une liqueur et (b) un résidu solide.

Suivant l'invention, la température de la suspension est maintenue dans une plage prédéterminée appropriée pour la biolixiviation en régulant les débits et la composition du gaz, ainsi que, optionnellement, la concentration en solides de la suspension.

Le métal libéré par biolixiviation du minerai métallifère qui le rendait inaccessible à un traitement direct peut se présenter (partiellement ou totalement) sous forme dissoute, et donc présente dans la liqueur du produit récupéré à la fin de la biolixiviation. Le métal libéré peut également se trouver (partiellement ou totalement) sous forme solide (c'est-à-dire non-dissoute) et donc présente dans le résidu solide du produit récupéré.

La température de la suspension est considérée appropriée pour la biolixiviation quand elle permet une activité suffisante des micro-organismes du consortium et donc une cinétique de biolixiviation efficiente.

En pratique, la régulation thermique est non seulement liée à l'activité microbienne, mais également liée à la géométrie des bassins de biolixiviation, et en particulier au rapport volume sur surface, ainsi qu'aux conditions ambiantes et leur variabilité.

Ainsi, selon l'invention, la température de la suspension peut-être contrôlée sans utilisation d'un système de régulation thermique externe, tels que des échangeurs de chaleur ou d'autres éléments de chauffe et/ou de refroidissement.

Du fait de permettre le maintien de la température de la suspension dans une plage optimale pour la biolixiviation sans nécessité d'éléments de chauffe au de refroidissement, la présente invention permet non seulement de réaliser une économie d'énergie, mais également d'obtenir une cinétique de biolixiviation optimale dans des bassins de grande taille, voire dans des bassins à ciel ouvert.

### Minerai

Le minerai métallifère qui sert de substrat au procédé selon l'invention peut par exemple provenir de déchets miniers ou être un minerai à faible teneur en métaux à récupérer.

L'invention est particulièrement utile pour un minerai sulfuré et/ou un minerai de composition complexe, par exemple un minerai polymétallique, ou encore un minerai contenant du carbone (par exemple du carbonate). Un avantage de l'invention est de permettre dans des conditions économiques acceptables le traitement d'un minerai métallifère pour lequel la teneur en métal d'intérêt est relativement pauvre. Les types de minerais sulfurés utilisés peuvent comprendre par exemple de la pyrite, des sulfures de cuivre, de la galène ou de la sphalérite. Par exemple des minerais de composition complexe qui pourraient servir de substrats sont les schistes noirs cuprifères du Kupferschiefer. Le minerai métallifère à traiter peut également contenir une forte proportion de carbone, par exemple 5% de carbonate.

Le minerai utilisé est broyé. Les particules correspondantes peuvent présenter une granulométrie (correspondant au D90) allant de 10 µm à 300 µm, de préférence de 10 µm à 200 µm et typiquement de l'ordre de 50 µm ; le D90 indique que 90% en masse des particules considérées présentent une taille inférieure à D90, les 10% en masse restant présentant une taille d'au moins D90.

### Consortium et milieu nutritif

Le consortium microbien utilisé dans le procédé selon l'invention comporte de préférence des micro-organismes autotrophes et acidophiles. De manière utile, le consortium microbien est mésophile et/ou modérément thermophile.

Un consortium mésophile est un consortium qui croît à des températures allant de 20°C à 40°C. Un consortium modérément thermophile est un consortium qui croît à des températures allant de 40 à 60°C.

Le consortium comprend avantageusement des micro-organismes des espèces *Leptospirillum ferriphilum, Acidithiobacillus caldus* et/ou *Sulfobacillus benefaciens,* qui peuvent se trouver dans la banque de souches DSMZ (Deutsche Sammlung von Mikroorganismen und Zellkulturen). Le consortium peut, par exemple être le consortium microbien BRGM-KCC qui est décrit dans l'article Morin, D., d'Hugues, P. (2007). « Bioleaching of a cobalt-containing pyrite in stirred reactors: a case study from laboratory scale to industrial application" dans : Rawlings, D.E., Johnson, D.B. (Eds), Biomining, Chapter 2, Springer-Verlag, Berlin, pp. 35 - 55.

La composition précise du consortium peut varier selon le minerai métallifère à lixivier.Un substrat nutritif adapté au consortium est avantageusement introduit dans le milieu pour permettre le développement des micro-organismes et ainsi promouvoir la biolixiviation. Ce milieu peut-être avantageusement dérivé d'un milieu « 9K » décrite par Silverman et Lundgren dans « Studies on the chemoautotrophic iron bacterium Ferrobacillus ferrooxidans. I. An improved medium and harvesting procedure for securing high cell yields. », Silverman, M.P. and Lundgren, D.G., J. Bacteriol., 77: 642-647. (1959) et adapté au consortium particulier. Ainsi un milieu de composition (NH₄)₂SO₄, 3,70 g.L⁻¹, H₃PO₄, 0,80 g.L⁻¹; MgSO₄·7H₂O, 0,52 g.L⁻¹, KOH, 0,48 g.L⁻¹ est particulièrement adapté à la croissance d'un consortium microbien tel que décrit précédemment lorsque le substrat minéral est de la pyrite cobaltifère. La composition précise du substrat nutritif peut varier en fonction des espèces présentes dans le consortium microbien et en fonction du minerai à traiter.

### pH

La suspension est généralement une suspension aqueuse.

Dans le bassin, il est préféré que l'on maintienne la suspension à un pH supérieur à 0,8. De préférence le pH du milieu est maintenu dans une gamme de 0,8 à 2,5 ; avantageusement le pH est maintenu entre 1 et 1,5.

Pour faire baisser ou augmenter le pH aux valeurs de préférence on peut, par exemple, ajouter respectivement de l'acide sulfurique ou de la calcite, du carbonate de calcium, de la chaux vive ou éteinte à la suspension.

La plage de pH peut varier selon les espèces présentes dans le consortium microbien et selon la composition du minerai à traiter.

### Concentration de solide

L'invention a l'avantage particulier de permettre non seulement le traitement de suspensions à faible concentration de particules solides, mais également de suspensions à haute concentration de particules solides de minerai métallifère.

En effet, dans les procédés classiques de biolixiviation en réacteur agité, l'utilisation d'air pour apporter l'oxygène oblige à l'injection d'un très grand volume de gaz dont la dispersion nécessite une grande puissance au niveau du système de dispersion, ce qui réduit d'autant la puissance disponible pour assurer la mise en suspension des particules solides par l'agitateur. L'utilisation d'un gaz plus riche en oxygène permet d'apporter plus d'oxygène avec un débit total de gaz plus faible tout en favorisant également la dissolution de l'oxygène dans le liquide. Par ailleurs, la possibilité d'utiliser plusieurs systèmes de dispersion de gaz permet de réduire d'autant le débit de gaz injecté au niveau de chaque système.

La puissance disponible pour l'agitation du milieu, en particulier pour la mise et le maintien en suspension homogène des particules solides, se voit donc augmentée du fait de la réduction de la puissance nécessaire à la dispersion du gaz.

A ceci s'ajoute, dans le cas où le système d'agitation est composé d'agitateurs, le fait que la géométrie d'une lagune est telle que le ratio diamètre du mobile du système d'agitation sur diamètre de la lagune est en général plus faible que pour un réacteur agité tel qu'utilisé dans les procédés de biolixiviation connus. Or plus ce ratio est faible plus la mise et le maintien en suspension sont aisés. En d'autres termes, la vitesse d'agitation nécessaire à remettre/maintenir en suspension les particules est plus faible dans les grands espaces que dans les espaces confinés. Ainsi, quand le procédé suivant l'invention est mis en oeuvre dans un ou des bassins de grande taille, la puissance nécessaire à la mise en suspension des particules solides est réduite.

Selon l'invention, la concentration dans la suspension est avantageusement de 15 à 40%, de préférence de 22 à 38% et encore de préférence 25 à 35%, par exemple environ 30%, en masse de solide par rapport à la masse totale de suspension.

Le minerai métallifère broyé peut être dispersé dans un liquide avant son introduction dans le bassin.

### Système d'agitation

Selon l'invention, le système d'agitation peut comporter un circulateur de la suspension ou un agitateur, voire une combinaison des deux. De préférence, le système d'agitation comporte au moins un agitateur. Le système d'agitation comporte avantageusement au moins un et de préférence plusieurs agitateurs flottants.

L'utilisation d'agitateurs flottants augmente significativement la flexibilité du procédé suivant l'invention et est notamment utile pour des bassins non circulaires et/ou de superficie élevée et/ou à ciel ouvert. En effet, la position d'un agitateur flottant dans le bassin et le nombre d'agitateurs flottants dans un bassin peuvent être aisément modifiés.

La vitesse de rotation des agitateurs est choisie dans une gamme allant de 40 à 500 t/min, de préférence de 200 à 350 t/min. Cependant à l'échelle du laboratoire la vitesse de rotation peut atteindre 1500 t/min.

Un circulateur de suspension peut par exemple avoir la forme suivante : la suspension de biolixiviation est aspirée dans une canalisation hors du bassin par une pompe appropriée pour un liquide de ce type. Le gaz est injecté (injection simple ou bien utilisation d'un Venturi ou encore d'un poreux par exemple) dans cette canalisation et mélangé à la suspension (à l'aide par exemple d'un mélangeur statique). En aval de l'injection de gaz, une longueur de ligne suffisante de la canalisation permet d'assurer un bon rendement de transfert. La suspension ainsi « chargée » en gaz est ensuite réinjectée dans le bassin, idéalement dans le fond du bassin, en plusieurs points afin d'assurer un transfert du gaz homogène dans tout le bassin. La pompe peut avantageusement être une pompe Vortex, réputée non « traumatisante » pour les micro-organismes.

### injection de gaz

Selon l'invention, un gaz contenant de l'oxygène est injecté dans la suspension pour apporter l'oxygène nécessaire au développement du consortium microbien et à la réaction de lyse microbienne. Dans le cas où le minerai métallifère ne contient pas suffisamment de carbone métabolisable par le consortium microbien pour assurer sa croissance, du CO₂ est avantageusement également injecté dans la suspension, de préférence sous forme d'un mélange gazeux avec l'oxygène. Dans ce dernier cas, le gaz contenant de l'oxygène contient donc également du CO₂.

En général, la température ambiante autour du bassin dans lequel le procédé est réalisé est inférieure à la température adaptée à l'activité du consortium microbien et au développement du consortium microbien. En l'absence d'un système d'échange thermique et de contrainte particulière sur la canalisation de gaz (isolation thermique après compression, faible longueur des canalisations, etc.), le gaz injecté est en général proche de la température ambiante. L'injection d'un débit important de gaz peut donc aboutir, malgré le caractère exothermique de la réaction, au refroidissement de la suspension jusqu'à des températures ne permettant pas de maintenir l'activité microbienne à un niveau adéquat.

Selon l'invention, ceci est évité en ajustant le débit de gaz injecté afin de maintenir la température de la suspension dans une plage de température prédéterminée appropriée pour la biolixiviation. L'apport en oxygène nécessaire à la réaction est alors assuré en ajustant la composition du gaz, et notamment sa concentration en oxygène.

En particulier, dans le cas où il n'est pas possible de maintenir à la fois un débit de gaz permettant le maintien de la température dans la plage prédéterminée et l'apport en oxygène nécessaire à la réaction, il est aussi possible d'agir sur la quantité de minerai métallifère injecté dans le bassin, par exemple de diluer la suspension par ajout de liquide ou, au contraire, d'augmenter la concentration en minerai métallifère en en ajoutant à la suspension.

Selon encore un autre aspect particulièrement avantageux de l'invention, le système d'agitation comporte au moins un dispositif d'éjection/dispersion d'un gaz, en particulier d'un gaz contenant de l'oxygène et/ou de dioxyde de carbone.Un tel circulateur de suspension intégrant un injecteur de gaz a déjà été décrit ci-dessus. De manière analogue, quand le système d'agitation comporte un agitateur, et notamment un agitateur flottant, celui-ci est avantageusement muni d'un injecteur de gaz.

Un mélange gazeux adapté au procédé selon l'invention peut par exemple contenir 1% de dioxyde de carbone, 49% d'azote et 50% d'oxygène en volume.

### Bassin

Bien que l'invention soit apte à être utilisée à faible échelle, voire à échelle de laboratoire, elle est, comme déjà indiqué ci-dessus, particulièrement utile pour le traitement de minerais métallifères à grande échelle.

Le ou les bassins utilisés dans le procédé selon l'invention sont ainsi avantageusement de dimensions adaptées au traitement industriel des minerais, tels que des lagunes. Ces dimensions dépendent par exemple du débit d'alimentation en suspension/pulpe et du temps de séjour nécessaire à la lixiviation du minerai. Par exemple de tels bassins ont une profondeur jusqu'à 6 m et représentent une surface totale jusqu'à 1500 m².

Le temps de séjour nécessaire à la lixiviation du minerai métallifère varie suivant les conditions de réactions et les matériaux de départ utilisés. Ce temps de séjour est généralement de l'ordre de 4 à 8 jours, par exemple de 6 jours.

Grâce à la présente invention, il est possible d'atteindre un rendement de biolixiviation adéquat pour un temps de séjour réduit avec des bassins sans avoir recours à des systèmes de chauffe et/ou de refroidissement conventionnels, tels que des échangeurs de chaleur.

Suivant l'invention, la biolixiviation du minerai métallifère peut notamment être réalisée dans un seul bassin ou dans plusieurs bassins en série.

### Installation et Utilisation

L'invention porte également sur une installation de lagunage comprenant un bassin de biolixiviation, ledit bassin comprenant une phase liquide, typiquement une phase aqueuse, un minerai métallifère broyé, un consortium microbien de biolixiviation, un substrat nutritif des micro-organismes du consortium microbien. L'installation comprend en outre un système d'agitation pour la mise et/ou le maintien en suspension du minerai métallique dans la phase liquide. L'installation comporte également au moins un injecteur pour l'injection d'un gaz dans la suspension de minerai métallique.

Suivant l'invention, ledit au moins un injecteur de gaz est relié à une source de gaz oxygéné et à une source d'un gaz dilueur. Le gaz oxygéné présente une concentration en O₂ supérieure à la concentration en O₂ de l'air. Le gaz oxygéné présente typiquement une concentration en O₂ de 50 à 100% vol, de préférence d'au moins 75% vol et encore de préférence d'au moins 85%. La source de gaz oxygéné peut ainsi être une unité de séparation des gaz de l'air, un pipeline de gaz oxygéné (par exemple d'oxygène industriel) ou un réservoir de gaz oxygéné liquéfié.

Le gaz dilueur comprend avantageusement entre 0 et 21% vol d'O₂.

Le gaz dilueur peut être un gaz inerte vis-à-vis des réactions de biolixiviation, tel que l'azote, ne contenant pas d'oxygène.

Toutefois, il est également possible d'utiliser comme gaz dilueur un gaz présentant une concentration relativement faible (et en tout cas plus faible que la concentration en oxygène du gaz oxygéné), comme notamment de l'air.

Dans le premier cas, la source de gaz dilueur peut être une installation produisant le gaz inerte, comme notamment une unité de séparation des gaz de l'air produisant non seulement de l'oxygène utilisable comme gaz oxygéné, mais également de l'azote. La source de gaz dilueur peut aussi être un réservoir du gaz dilueur, le cas échéant liquéfié.

Dans le deuxième cas, la source de gaz dilueur est avantageusement un compresseur d'air.

L'installation comporte également un régulateur de gaz oxygéné et un régulateur de gaz dilueur. Le régulateur de gaz oxygéné règle le débit de gaz oxygéné vers le au moins un injecteur. Le régulateur de gaz dilueur règle le débit de gaz dilueur vers ledit au moins injecteur.

Le (au moins) un injecteur de l'installation est optionnellement également relié à une source de gaz de carbone métabolisable. Le gaz de carbone métabolisable contient typiquement de 50 à 100% de CO₂ en volume, de préférence au moins 75% vol et encore de préférence au moins 8 5% vol. Une telle source de gaz de carbone métabolisable est par exemple un réservoir de CO₂ liquéfié. Dans ce cas, le système comporte avantageusement également un régulateur pour le réglage du débit de gaz de carbone métabolisable vers le ou moins un injecteur.

Les régulateurs de gaz sont de manière utile des vannes de réglage. Quand la source de gaz dilueur est un compresseur d'air, le régulateur de gaz dilueur peut faire partie intégrante dudit compresseur, notamment dans le cas d'un compresseur à débit réglable.

L'installation suivant l'invention permet ainsi de réguler à la fois le débit d'O₂ injecté dans le bassin et optionnellement le débit de CO₂ injecté dans le bassin, en fonction des besoins des réactions de biolixiviation ainsi que, séparément, le débit global de gaz injecté dans le bassin. Ceci permet, selon un aspect avantageux de l'invention d'utiliser une installation sans système de régulation classique de la température de la suspension dans le bassin, notamment de type échangeur de chaleur.

Quand, conformément à la présente invention, la température de la suspension est maintenue dans la plage prédéterminée en régulant les débits et la composition du gaz injecté, ainsi que, optionnellement, la concentration en solides de la suspension et le gaz dilueur ne contient pas ou très peu d'O₂, la concentration en oxygène du gaz injecté est déterminée par le rapport entre d'une part, le débit du gaz oxygéné et, d'autre part, le débit du gaz dilueur ou la somme du débit de gaz dilueur et le débit du gaz de carbone métabolisable. Quand le gaz dilueur et/ou le gaz contenant le CO₂ présente une concentration non-négligeable en O₂, l'apport d'O₂ par le gaz dilueur et/ou le gaz contenant le CO₂ est pris en compte lors du réglage de la composition, et en particulier de la concentration en O₂, du gaz injecté dans la suspension.

Le réglage de la composition et du débit du gaz injecté peut être manuel ou automatique, continue ou de manière interrompue (par intervalle).

Ainsi, l'installation suivant l'invention peut comporter une unité de contrôle pour le contrôle du régulateur du gaz oxygéné et du régulateur du gaz dilueur et optionnellement également du régulateur du gaz de carbone métabolisable de manière à réguler le débit desdits gaz et ainsi également le débit global et la composition, et notamment la concentration en O₂ et CO₂, du gaz fourni à l'injecteur de gaz et injecté dans la suspension.

L'installation comporte avantageusement au moins un système de mesure de température pour la mesure de la température de la suspension dans le bassin. Dans ce cas, l'unité de contrôle est avantageusement reliée audit système de mesure de température de manière à permettre la régulation du débit gazeux global et la concentration en oxygène du gaz injecté par l'unité de contrôle en fonction de la température mesuré.

Le bassin peut être un bassin à ciel ouvert et/ou qui ne comporte pas d'éléments de chauffe ou de refroidissement. L'installation suivant l'invention peut comporter un seul bassin ou plusieurs bassins, par exemple plusieurs bassins de biolixiviation en série.

Le consortium microbien est typiquement un consortium autotrophe. Il est de préférence mésophile à modérément thermophile.

Les éléments de cette installation peuvent avantageusement être tels que décrits en référence avec le procédé de l'invention, par exemple en ce qui concerne le système d'agitation. De manière analogue, les éléments inclus dans la description de l'installation sont également applicables au procédé suivant l'invention.

### Récupération

Au cours de la biolixiviation le métal présent dans le minerai métallifère est progressivement libéré. Le métal libéré est typiquement présent sous forme dissoute. Dans ce cas, la phase liquide du milieu se charge progressivement en métal libéré dissous. Comme décrit ci-dessus, le métal libéré du peut également être partiellement ou totalement présent en forme solide. La suspension obtenue à l'issue du procédé de biolixiviation peut faire l'objet d'une séparation liquide/solide (par exemple par décantation et/ou filtration) et ainsi être séparée en une phase liquide et un résidu solide. La phase liquide ainsi obtenue est également appelée liqueur. Quand au moins une fraction du métal libéré est présente sous forme dissoute, le métal libéré dissous est présente dans la phase liquide qui peut être raffinée par des méthodes connues pour permettre la récupération des métaux de valeur dissous. Quand au moins une fraction du métal de valeur libéré est présente sous forme solide, cette fraction peut également être récupérée par des méthodes connues. Le résidu solide peut, par exemple, être récupéré pour subir une nouvelle étape de lixiviation dans d'autres conditions, par exemple pour permettre la récupération d'un autre type de métal valorisable (métaux précieux). Il peut également être stocké comme déchet, ou être utilisé à d'autres fins.

La présente invention porte aussi sur une méthode de régulation de température d'une suspension de biolixiviation comprenant du minerai métallifère, un consortium microbien de biolixiviation et un substrat nutritif des micro-organismes du consortium. Selon cette méthode on maintient la température de la suspension dans une plage prédéterminée en régulant le débit et la composition d'un gaz contenant de l'oxygène et optionnellement du dioxyde de carbone qu'on injecte dans ladite suspension, ainsi que, optionnellement, en régulant la concentration en solides de la suspension.

L'invention porte aussi sur l'utilisation d'un minerai métallifère broyé, d'un consortium microbien de biolixiviation, et notamment d'un tel consortium microbien autotrophe et mésophile à modérément thermophile, d'un substrat nutritif des micro-organismes du consortium, et d'un système d'agitation, pour la réalisation d'une installation ou dans un procédé de biolixiviation par lagunage.

Enfin les produits issus du procédé et/ou de l'installation tels que décrits précédemment font également partie de l'invention, en particulier la suspension, le produit liquide comprenant le métal libéré par biolixiviation, la liqueur contenant du métal dissous par biolixiviation, le résidu solide, qui peut comprendre du métal non-dissous libéré du minerai métallifère par biolixivation, ainsi que les métaux récupérés de la suspension/de la liqueur tels que le cuivre, le zinc, le molybdène, l'antimoine, le nickel, l'or, l'argent et le cobalt.

L'invention sera mieux comprise à la lecture des exemples et des figures qui suivent qui ne présentent aucun caractère limitatif et dans lesquels :
La Figure 1 est un graphique représentant l'évolution du potentiel d'oxydoréduction (le redox) et du nombre de micro-organismes dans la pulpe au cours du temps dans le premier exemple de réalisation du procédé selon l'invention.
La Figure 2 représente les taux de dissolution par biolixiviation des métaux obtenus dans le premier exemple de réalisation du procédé selon l'invention.
La Figure 3 est une représentation graphique de l'évolution de la température dans les milieux réactionnels utilisés du procédé selon l'invention de l'exemple 2.
La Figure 4 est un schéma du procédé de l'installation de biolixiviation en bassins selon l'exemple 3.
La figure 5 est une vue de dessus schématique d'une installation de biolixiviation utilisant un circulateur de suspension.

### Exemple 1

Une installation pilote a été réalisée à l'échelle du laboratoire dans des conditions facilement extrapolables à l'échelle industrielle.

Le minerai traité est un déchet minier cobaltifère provenant d'une mine Européenne et contenant environ 60% (massique) de pyrite (disulfure de fer). Ce minerai présente une teneur en cobalt de l'ordre de 800 ppm ainsi que de l'or à 1 ppm et du cuivre à 1900 ppm.

Une quantité de 713kg de minerai a été ajoutée à une quantité de 1318 kg de substrat nutritif et 226 kg d'inoculum dans une cuve de 2 m³ de manière à obtenir une pulpe. Cette cuve est isolée thermiquement de manière à ce que les résultats obtenus soit facilement extrapolables vers une application industrielle de type lagune.

En effet, le rapport surface sur volume d'une telle cuve est bien plus élevé que pour une lagune, les pertes thermiques par les bords y sont donc bien plus importantes en proportion du volume de la suspension, l'isolation des bords de la cuve permet donc de s'approcher des conditions thermiques intervenant sur le volume d'une lagune.

Cette pulpe a été inoculée à l'aide d'un consortium microbien issu de la culture BRGM-KCC dont les principaux organismes sont affiliés aux genres *Leptospirillum, Acidithiobacillus* et *Sulfobacillus.* Cette culture a été repiquée plusieurs fois en mode « batch » en augmentant progressivement le volume de liquide de 2 mL à 200 L.

Le substrat nutritif utilisé est un milieu appelé «9Km ». Il s'agit d'un milieu "9K" modifié et optimisé pour permettre la croissance microbienne sur des pyrites cobaltifères. Sa composition est la suivante : (NH₄)₂SO₄, 3,70 g.L⁻¹, H₃PO₄, 0,80 g.L⁻¹; MgSO₄-7H₂O, 0,52 g.L⁻¹; KOH, 0,48 g.L⁻¹.

Un agitateur flottant fourni par la société MILTON ROY Mixing sous la marque TURBOXAL® est installé à la surface de la pulpe. La vitesse d'agitation est 1300 t/min. Le pH de début de réaction a été ajusté à 1,8 par ajout d'acide sulfurique concentré. Au cours de la réaction le pH a été contrôlé par ajout de calcite de manière à ce qu'il ne soit jamais inférieur à 0,8.

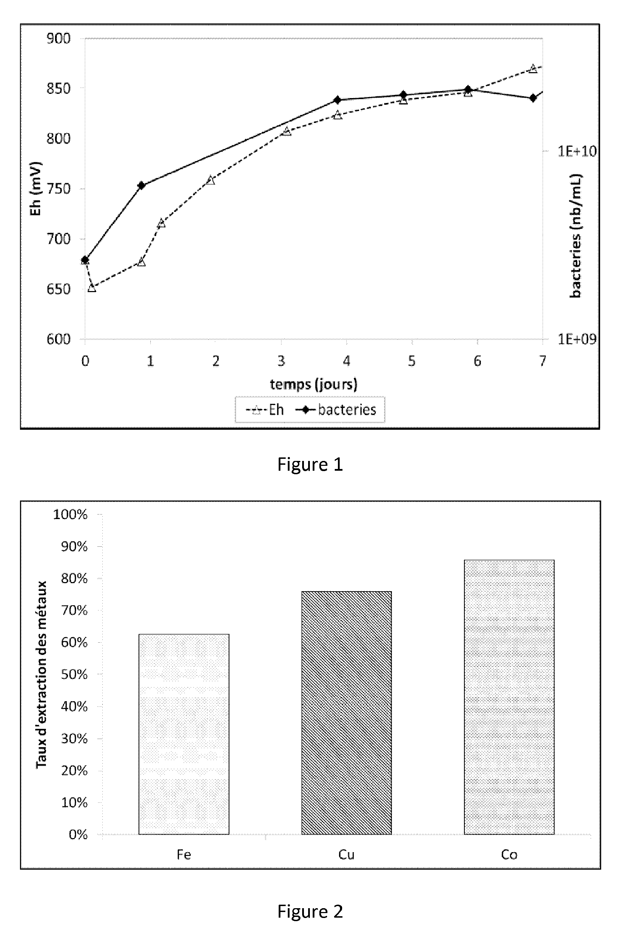

La Figure 1 montre l'évolution du potentiel redox de solution (Eh) et de la concentration microbienne dans la pulpe qui ont été mesurés au cours du processus de biolixiviation. On observe une augmentation du potentiel redox qui s'accompagne d'une augmentation de la concentration microbienne (de 2,6 10⁹ à 3,4 10¹⁰ micro-organismes/mL).

La valeur d'Eh atteinte dans la solution (proche de 900 mV) indique que la totalité du fer en solution est sous forme de fer ferrique (Fe^{III}), ce qui démontre une bonne activité microbienne d'oxydation confirmée par l'augmentation de la concentration microbienne.

Grâce à cette forte activité microbienne, on obtient des taux d'extraction des métaux élevés. Le taux de mise en solution du cobalt après 6 jours de test est de 86%, ce qui indique que 86% de la pyrite contenue dans la pulpe a été lixiviée (voir Figure 2). Ces résultats démontrent de manière surprenante qu'il est possible d'obtenir de forts taux d'extraction en utilisant simplement un agitateur flottant opérant à vitesse d'agitation élevée sans dommage pour les micro-organismes (pas d'effet inhibiteur, pas de lyse microbienne préjudiciables) et dans des conditions de lagunage.

### Exemple 2

Une installation pilote de biolixiviation imitant un lagunage par une série de bassins en cascade a été réalisée à l'échelle du laboratoire dans des conditions facilement extrapolables à un cas industriel de lagunes en série.

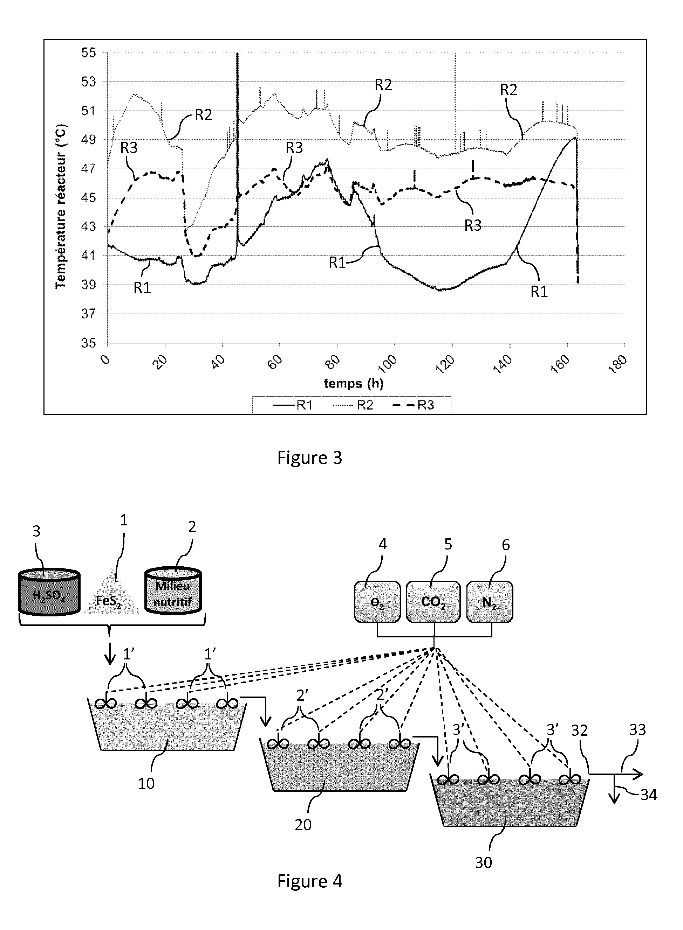

Le même minerai sulfuré, le même inoculum et les mêmes conditions d'agitation que ceux décrits à l'exemple 1 ont été utilisés dans une installation comprenant un bassin primaire de 50 L (R1) et de deux bassins secondaires de 20 L (R2 et R3). Les bassins sont alimentés en cascade. Dans R1, le mélange gazeux injecté est composé de 50% d'O₂ et 1% de CO₂, et le débit est fixé à 316 NL/h. Dans R2 et R3, le débit et la concentration en O₂ ont été diminués car la demande en oxygène est moins forte dans les bassins secondaires (74 NL/h et 40% d'O₂). La Figure 3 montre l'évolution de la température dans les bassins sans utilisation d'un système externe de régulation de température. On observe que la température est toujours supérieure à 35°C dans les trois bassins ce qui permet de maintenir une forte activité microbienne. En effet, lorsque la température est inférieure à 35°C, l'activité oxydante des micro-organismes de type *Leptospirillum, Acidithiobacillus* et *Sulfobacillus* est très réduite. Pendant la durée de la biolixiviation, la concentration microbienne reste proche de 2x10¹⁰ micro-organismes/mL et le potentiel d'oxydo-réduction proche de 900 mV. En sortie de R3, le taux d'extraction du cobalt est compris entre 80 et 85%. L'ensemble de ces données démontre la capacité du système à s'autoréguler en température tout en maintenant une bonne activité microbienne et donc une biolixiviation efficace des sulfures.

Ces conditions (vitesse d'agitation, concentration en oxygène dans le gaz) peuvent varier dans une certaine mesure en fonction de la composition du matériau (teneur en sulfures et en carbonates, nature des espèces minérales...). L'adaptation de ces conditions fait partie des techniques de routine.

### Exemple 3

Un mode de réalisation du procédé selon l'invention avec trois lagunes en série (en cascade) est représenté à la figure 4 et exemplifié ci-après.

Un minerai sulfuré 1 finement broyé est mis en pulpe à la concentration solide désirée (de 15 à 40% (massique) et par exemple 30% (massique)) dans un substrat nutritif 2 adapté au développement des micro-organismes utilisés pour la biolixiviation. Le pH de la pulpe est ajusté par ajout d'acide sulfurique concentré 3 pour atteindre une valeur de l'ordre de 1,8 (et typiquement allant de 0,8 à 1,8). La pulpe est ensuite injectée dans des bassins 10, 20, 30 préalablement inoculés par un consortium microbien autotrophe, mésophile à modérément thermophile, associant des micro-organismes de type *Leptospirillum ferriphilum, Acidithiobacillus caldus* et *Sulfobacillus benefaciens* (par exemple le consortium microbien issu de la culture BRGM-KCC). Les trois types de micro-organismes nécessaires à la lixiviation *(Leptospirillum ferriphilum, Acidithiobacillus caldus* et *Sulfobacillus benefaciens)* sont disponibles dans la banque de souche DSMZ.

Les trois lagunes sont équipées d'agitateurs flottants 11, 21, 31 qui assurent le mélange de la suspension ainsi que l'injection et le transfert de l'oxygène et du dioxyde de carbone nécessaires au fonctionnement des micro-organismes et à l'oxydation des sulfures. De tels agitateurs sont disponibles dans le commerce. Ainsi les agitateurs vendus par la société MILTON ROY Mixing sous la marque TURBOXAL® et décrits dans la demande de brevet No EP-A-2714256 peuvent être utilisés pour réaliser le procédé selon l'invention.

Le processus de biolixiviation a lieu au sein de ces lagunes 10, 20, 30.

L'utilisation de lagunes en série permet de concentrer la liqueur. Son fonctionnement est le suivant :
- les lagunes 10, 20, 30 sont agitées au moyen des agitateurs flottants,
- les lagunes 10, 20, 30 sont agencées pour un fonctionnement en série,
- le volume de l'ensemble des lagunes 10, 20, 30 est adapté au débit de suspension de façon à garantir un temps de séjour minimal de 6 jours dans l'ensemble de l'installation et
- l'alimentation des lagunes et notamment le transfert de la pulpe d'une lagune à la lagune suivante est l'extraction de pulpe de la dernière lagune 30, est réalisée au moyen de pompes (non représentées). Les lagunes ont une profondeur de 6 m.

En sortie 32 de lagunes on obtient une pulpe constituée d'une liqueur riche en métaux 33 libéré et dissous et d'un résidu solide 34 contenant les phases minérales non-lixiviables, la totalité du métal libéré par lixiviation étant présente sous forme dissoute. Après une étape de séparation solide/liquide (par décantation ou filtration), la liqueur est envoyée au raffinage pour la récupération des métaux tandis que le résidu solide peut être soit récupéré pour subir une nouvelle étape de lixiviation dans d'autres conditions (par ex. pour la récupération des métaux précieux) soit stocké comme déchets.

La profondeur des lagunes peut varier de 2 à 10 m et leur volume total dépend du débit d'alimentation en pulpe et du temps de séjour nécessaire à la lixiviation des sulfures contenus dans le matériau (de l'ordre de 4 à 8 jours et par exemple de 6 jours). Le nombre des lagunes peut varier, par exemple de 2 à 10.

La vitesse d'agitation dépend principalement de la concentration de la pulpe et de sa densité, elle varie typiquement dans une plage entre 200 à 350 t/min.

Le gaz injecté dans la pulpe au moyen des agitateurs flottants 11, 21, 31 comprend en volume autour de 1% vol de CO₂ (typiquement de 1 à 3% vol) issu du réservoir de CO₂ 5, une concentration variable d'azote de moins de 78% vol d'azote, l'azote étant issu du réservoir d'azote issu du réservoir d'azote liquéfié 6 et une concentration en oxygène variable de plus de 21% vol, l'oxygène étant issu du réservoir d'oxygène liquéfié 4Le gaz peut ainsi par exemple contenir 49% vol d'azote et 50% vol d'oxygène. L'oxygène doit être injecté en quantité suffisante pour assurer la dissolution d'une quantité suffisante d'oxygène pour permettre la dissolution des sulfures (ex : pour dissoudre 1 kg de pyrite (FeS₂), il faut fournir 1 kg d'O₂).

L'oxygène peut être injecté sous forme concentrée ou non. La composition du gaz injecté et son débit sont également ajustés pour chaque lagune 10, 20, 30 au moyen de régulateurs de débit (non représenté) pour compenser principalement la chaleur générée par la réaction d'oxydation des sulfures (réaction exothermique) mais également l'influence de l'environnement sur la température de la pulpe dans les lagunes, et maintenir le système à la température requise pour le fonctionnement du consortium microbien (entre 35°C et 48°C).

### Exemple 4

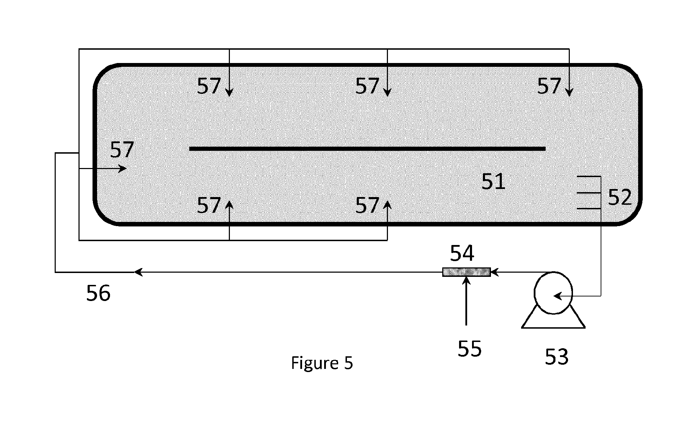

La figure 5 montre un bassin de biolixiviation 51 contenant une suspension aqueuse de minerai métallique à traiter, d'un consortium microbien de biolixiviation et d'un milieu nutritif correspondant.

Le bassin 51 est muni d'un circulateur de suspension.

Une portion de la suspension est extraite du bassin 51 par une clarinette d'aspiration 52 au moyen d'une pompe 53.

Ladite portion est refoulée dans un circuit de recirculation 56.

Le circuit 56 est muni d'un système 54 pour l'injection d'un gaz dans une phase liquide, tel qu'un injecteur venturi ou un injecteur poreux. Un débit régulé d'un mélange gazeux présentant une concentration contrôlée en oxygène et optionnellement également en CO₂ issu d'un dispositif de fourniture de gaz 55 est mélangé avec la suspension dans le circuit de recirculation 56 au moyen de l'injecteur de gaz 54. Le mélange gazeux est entraîné par la suspension dans le circuit de recirculation et injecté dans le bassin 51 avec cette suspension à des points de réinjection 57 répartis sur la circonférence du bassin. Un tel recirculateur de suspension avec injection de gaz intégré peut être combiné avec d'autres systèmes d'agitation tels que des agitateurs (flottants).

Afin d'adapter le procédé aux variations de minerai, à l'activité microbienne, aux bassins et aux conditions d'environnement pouvant impacter le procédé, il convient :
- D'augmenter ou de diminuer le temps de séjour de la pulpe dans les bassins pour atteindre le niveau de mise en solution des métaux souhaité ;
- D'augmenter ou de diminuer le débit de gaz pour respectivement baisser ou augmenter la température des bassins ;
- D'augmenter la concentration en O₂ dans le gaz (par exemple augmentation du ratio O₂/N₂) pour augmenter l'apport d'oxygène sans augmenter le débit de gaz ; et
- De contrôler les paramètres de fonctionnement de l'agitateur (notamment la vitesse de rotation, le diamètre du mobile, etc.) pour améliorer la mise en suspension des matériaux et homogénéiser la pulpe.

Par exemple, lorsque la température du système n'est pas assez élevée, le ratio O₂/N₂ augmente et le débit diminue. Au contraire, lorsque le système a besoin d'être refroidi, le ratio O₂/N₂ diminue et le débit augmente.

L'invention n'est pas limitée aux modes de réalisations présentés et d'autres modes de réalisation apparaîtront clairement à l'homme du métier.

## Revendications

1. Procédé de biolixiviation d'un minerai métallifère, ledit procédé comprenant les étapes suivantes :
a) l'ajout dans un bassin (10, 20, 30, 51) d'un minerai métallifère broyé (1), d'un milieu comprenant un consortium microbien de biolixiviation et d'un substrat nutritif (2) des micro-organismes du consortium microbien,
b) obtention d'une suspension dans le bassin (10, 20, 30, 51) au moyen d'au moins un système d'agitation (1', 2', 3') pour la mise et/ou le maintien en suspension du minerai métallifère dans une phase liquide,
c) l'injection dans la suspension d'un gaz contenant de l'oxygène et optionnellement du dioxyde de carbone,
d) la biolixiviation dans la suspension du minerai métallifère (1) par le consortium microbien de manière à obtenir du métal libéré,
e) la récupération d'un produit liquide (32) contenant du métal libéré et consistant en (a) une liqueur (33) et (b) un résidu solide (34),
**caractérisé en ce que** la température de la suspension est maintenue dans une plage prédéterminée appropriée pour la biolixiviation en régulant les débits et la composition du gaz injecté, ainsi que, optionnellement, la concentration en solides de la suspension.

2. Procédé selon la revendication 1, dans lequel le bassin (10, 20, 30, 51) est un bassin à ciel ouvert.

3. Procédé suivant l'une quelconque des revendications précédentes, dans lequel le gaz injecté présente une concentration en O₂ d'au moins 21 %vol d'O₂, de préférence d'au moins 40%vol et encore de préférence de 50%vol à 100%vol, et optionnellement une concentration en CO₂ de 0%vol à 5%vol, de préférence de 1%vol à 3%vol.

4. Procédé selon l'une des revendications précédentes, dans lequel ledit consortium microbien comprend des micro-organismes choisis parmi les espèces *Leptospirillum ferriphilum, Acidithiobacillus caldus* et *Sulfobacillus benefaciens,* et les combinaisons d'au moins deux desdites espèces.

5. Procédé selon l'une quelconque des revendications précédentes, dans lequel on maintient la suspension à un pH allant de 0,8 à 2,5 ; de préférence de 1,0 à 1,5.

6. Procédé selon l'une quelconque des revendications précédentes, dans lequel la suspension comprend de 15 à 40% en masse de solide par rapport à la masse totale de suspension, de préférence de 22 à 38% et encore de préférence de 25 à 35%.

7. Procédé selon l'une quelconque des revendications précédentes, dans lequel le système d'agitation comporte au moins un agitateur, de préférence au moins un agitateur flottant (1', 2', 2'), ledit au moins un agitateur étant avantageusement équipé d'au moins un injecteur pour l'injection du gaz dans la suspension.

8. Installation de biolixiviation en lagunage comprenant :
• un bassin (10, 20, 30, 51) contenant une suspension comprenant une phase liquide, un minerai métallifère broyé (1), un consortium microbien de biolixiviation et un substrat nutritif (2) des micro-organismes du consortium microbien ;
• au moins un système d'agitation (1', 2', 3') pour la mise et/ou le maintien en suspension du minerai métallifère (1) dans la phase liquide ;
• au moins un injecteur pour l'injection d'un gaz dans la suspension. **caractérisé en ce que** :
ledit au moins un injecteur est relié :
• à une source d'un gaz oxygéné (4) ayant une concentration en O₂ d'au moins 50% vol et encore de préférence d'au moins 85% vol ;
• à une source d'un gaz dilueur (6) ayant une concentration en O₂ de 0 à 21%vol;
• optionnellement à une source de gaz de carbone métabolisable (5) ayant une concentration en CO₂ d'au moins 50% vol, de préférence d'au moins 75% vol et encore de préférence d'au moins 85% vol ;
l'installation comportant également un régulateur de gaz pour le réglage du débit du gaz oxygéné et un régulateur de gaz dilueur pour le réglage du débit du gaz dilueur vers le au moins un injecteur et optionnellement également un régulateur pour le réglage du débit du gaz de carbone métabolisable vers le au moins un injecteur.

9. Installation suivant la revendication 8, dans laquelle la source de gaz dilueur est une source d'azote (6) ou une source d'air, ladite source d'air étant de préférence un compresseur d'air.

10. Installation suivant l'une des revendications 8 et 9, comprenant une unité de contrôle pour le contrôle du régulateur du gaz oxygéné et du régulateur du gaz dilueur et optionnellement également du régulateur du gaz de carbone métabolisable de manière à réguler le débit gazeux global, le débit d'O₂ et optionnellement le débit de CO₂ alimenté audit au moins un injecteur.

11. Installation suivant la revendication 10, comprenant au moins un système de mesure de température pour la mesure de la température de la suspension dans le bassin, l'unité de contrôle étant reliée audit système de mesure de température, l'unité de contrôle régulant le débit du gaz oxygéné et le débit du gaz dilueur, ainsi qu'optionnellement également le débit de gaz de carbone métabolisable dirigé vers le au moins un injecteur en fonction de la température mesuré par le système de mesure de température afin de maintenir la température de la suspension dans une plage prédéterminée.

12. Installation suivant l'une des revendications 8 à 11, dans laquelle le bassin (10, 20, 30, 51) est un bassin à ciel ouvert et/ou ne comporte pas d'éléments de chauffe ou de refroidissement.

13. Installation suivant l'une des revendications 8 à 12, dans laquelle le système d'agitation comporte au moins un agitateur, de préférence au moins un agitateur flottant (1', 2', 3'), le au moins un injecteur étant avantageusement intégré dans le au moins un agitateur.

14. Installation suivant l'une des revendications 8 à 13, dans laquelle le consortium microbien comprend des micro-organismes choisis parmi les espèces *Leptospirillum ferriphilum, Acidithiobacillus caldus* et *Sulfobacillus benefaciens,* et les combinaisons desdites espèces.

15. Méthode de régulation de température d'une suspension de biolixiviation, ladite suspension comprenant du minerai métallifère (1), un consortium microbien de biolixiviation et un substrat nutritif (2) des micro-organismes du consortium, méthode dans laquelle on maintient la température de la suspension dans une plage prédéterminée en régulant le débit et la composition d'un gaz contenant de l'oxygène et optionnellement du dioxyde de carbone qu'on injecte dans ladite suspension, ainsi que, optionnellement, en régulant la concentration en solides de la suspension.
